# EUROPÄISCHE PATENTSCHRIFT

(11) **EP 4 069 513 B1**
(45) Veröffentlichungstag und Bekanntmachung des Hinweises auf die Patenterteilung: **13.09.2023**
(21) Anmeldenummer: 20819641.0
(22) Anmeldetag: 26.11.2020
(51) Int. Cl.: B32B 38/18, B29C 51/14, B32B 37/04, B29C 35/02, B29C 70/08, B29D 24/00, B32B 1/00, B32B 3/12, B32B 5/18, B32B 27/12

(54) **VERFAHREN ZUR HERSTELLUNG EINER FORMBAREN THERMOPLASTISCHEN VERBUNDSTRUKTUR UND ENTSPRECHENDE VORRICHTUNG**
METHOD FOR PRODUCING A MOLDABLE THERMOPLASTIC COMPOSITE STRUCTURE AND CORRESPONDING DEVICE
PROCÉDÉ POUR PRODUIRE UNE STRUCTURE COMPOSITE THERMOPLASTIQUE DÉFORMABLE ET DISPOSITIF CORRESPONDANT

(30) Priorität: 03.12.2019 DE 102019218775
(43) Veröffentlichungstag der Anmeldung: 12.10.2022
(73) Patentinhaber: Fraunhofer-Gesellschaft zur Förderung der angewandten Forschung e.V., 80686 München (DE)
(72) Erfinder: GLÄSSER, Thomas, 06120 Halle (DE); STACHE, Peter, 06120 Halle (DE)
(74) Vertreter: Rösler, Uwe
(86) Internationale Anmeldenummer: PCT/EP2020/083514
(87) Internationale Veröffentlichungsnummer: WO 2021/110536

(56) Entgegenhaltungen:
- WO-A1-2015/090574
- WO-A1-2019/164413
- DE-A1-102010 005 456
- DE-A1-102012 006 609

## Beschreibung

### Technisches Gebiet

Die Erfindung bezieht sich auf ein Verfahren zur Herstellung einer formbaren thermoplastischen, endlosfaserverstärkten Verbundstruktur, die wenigstens zwei Schichten aufweist, von denen in wenigstens einer Schicht Endlosfasern in einer Matrix aus thermoplastischen Material eingebettet sind. Ferner werden eine formbare Verbundstruktur sowie eine Vorrichtung zu deren Herstellung beschrieben.

Zur Herstellung von Leichtbauteilen für Großserienanwendungen kommen endlosfaserverstärkte thermoplastische Kunststoffe zum Einsatz, die zumeist in Form von kompakten Mehrschichtstrukturen bzw. -laminaten oder Sandwichstrukturen mit wenigstens einer strukturierten Schicht, z.B. in Form einer Wabenkernstruktur, oder unstrukturierten Schicht, z.B. als Schaumkern, ausgeführt sind. Zum Zwecke einer verbesserten Robustheit und erhöhtem Schutz vor mechanischen Beschädigungen weisen derartige Mehrschichtstrukturen häufig zumindest eine einseitig, vorzugsweise beidseitig, angebrachte endlosfaserverstärkte Deckschicht auf.

Für die Herstellung von Leichtbauteilen werden die Mehrschichtstrukturen zumeist in Form ebener, planer Verbundstrukturhalbzeuge bereitgestellt, die wenigstens eine endlosfaserverstärkte Deckschicht aufweisen, in der Endlosfasern aus künstlich hergestellten Fasermaterialien, wie bspw. Glas, Kohlenstoff, Aramid oder aus natürlichen Faserrohstoffen, wie Zellulose, Bast oder Ähnlichem, in einer Matrix aus thermoplastischem Material eingebettet sind. Die Fasern können geometrisch geordnet, beispielsweise undirektional nebeneinander oder jeweils mit sich kreuzender Orientierung in Form eines Gewebes angeordnet sein, oder wirr, in Form eines Kneuls, Flies oder in Art eines Wattebausches in der thermoplastischen Matrix eingebettet vorliegen.

Die Verarbeitung der ebenen Verbundstrukturhalbzeuge zu komplex geformten Leichtbauteilen erfolgt vornehmlich im Rahmen von Press- oder Thermoformprozessen, bei denen das ebene, feste Verbundstrukturhalbzeug vor einem formgebenden Verarbeitungsschritt auf eine vom thermoplastischen Material abhängige Verarbeitungstemperatur erwärmt wird. Dabei wird das thermoplastische Kunststoffmaterial, in dem die Endlosfasern eingebettet sind, über dessen Schmelztemperatur erwärmt und somit aufgeschmolzen. Dies ist erforderlich, um sicherzustellen, dass die Endlosfasern während der Formgebung innerhalb der thermoplastischen Schmelzbereiche aneinander abgleiten können, so dass der Verbund nach erfolgter Formgebung unter Druck vermittels eines formgebenden Werkzeuges wieder möglichst optimal zu einem festen Verbund erstarrt. Während des Verformens erfolgt ein Verschieben bzw. Umorientieren der Fasern, wodurch sich signifikante Änderungen bzw. Auswirkungen auf die mechanischen Eigenschaften der fertiggestellten Bauteile ergeben. Das Umorientieren bzw. Verschieben der Fasern innerhalb der aufgeschmolzenen Matrix aus thermoplastischen Material während des formgebenden Prozesses muss daher vor und während der Prozessauslegung und -durchführung entsprechend berücksichtigt werden, um strukturelle Schwachstellen, die sich durch Faltenbildung oder Gassenbildungen innerhalb der Faseranordnung im fertiggestellten Zustand des Leichtbauteils ergeben können, zu vermeiden.

### Stand der Technik

Die Erwärmung des eben ausgebildeten Verbundstrukturhalbzeuges wird üblicherweise mittels Infrarotstrahlung durchgeführt, die auf die wenigstens eine zu erwärmende Deckschicht des Verbundstrukturhalbzeuges gerichtet wird. Die Exposition der zu erwärmenden Deckschicht mittels IR-Strahlung führt zu einer gleichmäßigen und homogenen Erwärmung des gesamten Deckschichtvolumens, um ein möglichst optimales Gleiten der Fasern innerhalb der Deckschicht zu ermöglichen. Spezielle Steuerungen ermöglichen ein homogenes Aufheizen mittels Infrarotstrahlung über die Schmelztemperatur des thermoplastischen Matrixsystems mit Temperaturabweichungen von nur wenigen Kelvin über gesamte Deckschichtoberfläche, siehe Dr. Mesut Cetin; Christian Herrmann; Stefan Schierl: Hochdynamisches und homogenes Aufheizen von Organoblechen, 16. ATZ-Fachtagung, Hamburg 2018.

Neben dem Aufheizprozess wird das Umformergebnis entscheidend durch das Formgebungswerkzeug beeinflusst. So können sich innerhalb des Leichtbauteils durch die Festlegung des Bauteildesigns auch erst während des Umformprozesses optimale Verlegegeometrien zur Ausbildung der Faseranordnung ergeben.

Zudem besteht die Möglichkeit mit Hilfe so genannter Niederhalter und/oder Stempelelemente, die im Umformwerkzeug integriert sind, den Formgebungsprozess positiv zu beeinflussen. In diesem Zusammenhang sei beispielsweise auf die Druckschrift WO 2018/060195 A1 verwiesen, aus der ein Verfahren zur Herstellung eines endlosfaservestärkten Formteils zu entnehmen ist, dessen verwendetes Umformwerkzeug einen Niederhalter aufweist, der lokal erhöhte Haftreibungskräfte zwischen den Endlosfasern und der Kunststoffmatrix zum Zwecke einer Faserfixierung bzw. Stabilisierung zu erzeugen vermag. Insbesondere bei stark gekrümmten Bauteilen kann vor allem in druckbeanspruchten Laminatbereichen eine Faltenbildung im Faserverlauf auf diese Weise ausgeschlossen werden. Je nach Bauteilkomplexität besteht darüber hinaus die Möglichkeit ein Verbundstrukturhalbzeug mit der zur Stärke des Umformgrades passenden Ausrichtung und Anordnung der Endlosfasern zu wählen. Dabei verfügen unidirektional nebeneinander angeordnete Fasern über ein geringes Umformvermögen, wohingegen Fasern in Form textiler Gewebe oder Gestricke beim Verformen ein Aufreißen zwischen den Fasern verhindern, wodurch stärkere Verformungen möglich werden.

Eine weitere Form zur Lagebeeinflussung von in einer erweichten thermoplastischen Matrix eingebetteten Endlosfasern während eines formgebenden Pressvorganges sieht vor, die Fasern mittels Bindermethoden vor dem Einbetten in die thermoplastische Materialmatrix lokal aneinander zu fixieren, um auf diese Weise die geometrische Faseranordnung zu stabilisieren, um beispielsweise ungewünschte Faserumorientierungen während des thermisch unterstützten Formgebungsprozesses zu vermeiden. Bekannte Bindermethoden sind z.B. das Fügen der Fasern mit Hilfe von Nähtechniken oder stoffschlüssigen Klebeverbindungen, siehe beispielsweise Lina Girdauskaite: Lokale Strukturfixierung im Preformherstellungsprozess für komplex gekrümmte Faserkunststoffverbundbauteile, Dresden 2011.

Die Druckschrift DE 10 2016 203 711 A1 offenbart ein Verfahren zur Herstellung eines formstabilen Hohlkörpers aus einem Organoblech, das aus Umformungsgründen zu Zwecken einer Umhüllung um ein Trägergerüst erwärmt wird, so dass sich das Organoblech durch plastische Verformung an die von dem das Trägergerüst aufgespannte Umfangskontur anzuschmiegen vermag. Die Druckschrift DE 10 2013 013 497 A1 beschreibt ein Verfahren zur Herstellung eines Bauteils aus wenigstens zwei separaten Organoblechen, die in einen gegenseitigen Überlapp gebracht werden, der vermittels eines Schweißverfahrens stoffschlüssig gefügt wird.

Die Druckschrift DD 94 886 A1 offenbart eine Vorrichtung zum Stumpfschweißen von Thermoplast-Halbzeugen mit einem prismatischen Reflektor, der einen den Reflektor passierenden IR-oder Laserstrahl beidseitig auf die sich stumpf gegenüberliegend angeordneten Stirnseiten zweier zu fügenden Thermoplast-Schweißteile richtet.

Die Druckschrift DE 10 2011 052 979 A1 beschreibt ein Verfahren sowie ein System zum Erwärmen einer Oberfläche eines Bauteils mittels IR-Strahlung, die von einer IR-Punktstrahlungsquelle emittiert wird und deren IR-Strahlen mittels einer Parabolspiegel-Anordnung in parallele IR-Strahlen umgeformt wird, die über eine Spiegelanordnung auf ausgewählte Oberflächenbereiche des Bauteils gerichtet werden.

Die Druckschrift DE 10 2014 006 681 A1 beschreibt ein Verfahren sowie eine Einrichtung zum Fügen flächiger, aus Faserbundmaterial bestehenden Körper, die an einem lokalen Fügebereich partiell aufgeschmolzen werden und in den ein thermoplastisches Fügeelement in Form einer Niete eingeführt wird.

Die Druckschrift DE 10 2010 005456 A1 beschreibt einen thermoplastischen Fügevorgang eines Wabenkerns mit zwei Deckschichten im Rahmen eines beheizten Presswerkzeuges, das jeweils über beide Deckschichten das herzustellende Sandwichbauteil unmittelbar kontaktiert, dabei erwärmt und umformt. Die beiden Deckschichten sowie der Wabenkern werden getrennt voneinander einer homogenen, d.h. ganzheitlichen Vorwärmung unterzogen und erst im Anschluss daran in das Presswerkzeug überführt, in dem die Deckschichten an den Wabenkern gefügt und im Weiteren verformt werden.

### Darstellung der Erfindung

Der Erfindung liegt die Aufgabe zugrunde, eine Voraussetzung zur Herstellung von thermoplastischen, endlosfaserverstärkten Verbundstrukturen zu schaffen, so dass umformbedingte und für die spätere Stabilität der Verbundstruktur nachteilige Faserverschiebungen und/oder Verformungen in einem Formgebungsprozess ausgeschlossen oder zumindest auf ein vernachlässigbar geringes Maß reduziert werden sollen. Hierzu gilt es ein geeignetes Verfahren anzugeben, mit dem eine formbare thermoplastische, endlosfaserverstärkte Verbundstruktur erhalten wird, die wenigstens zwei Schichten aufweist, von denen in wenigstens einer Schicht Endlosfasern in einer Matrix aus thermoplastischem Material eingebettet sind, und einem nachfolgenden thermischen Formgebungsprozess zugeführt werden kann.

Zudem gilt es, eine diesbezügliche formbare thermoplastische endlosfaserverstärkte Verbundstruktur anzugeben, die über die vorstehenden Eigenschaften verfügt. Auch gilt es, eine Vorrichtung zur Herstellung einer derartig formbaren, thermoplastischen endlosfaserverstärkten Verbundstruktur anzugeben.

Die Lösung der der Erfindung zugrundeliegenden Aufgabe ist in den Ansprüchen 1 und 2 angegeben. Der Gegenstand des Anspruches 11 richtet sich auf eine Vorrichtung zur Herstellung der formbaren thermoplastischen, endlosfaserverstärkten Verbundstruktur.

Das lösungsgemäße Verfahren greift den an sich bekannten Ansatz des lokalen Verbindens von Fasern zum Zwecke der Stabilisierung und/oder Form- und Lageerhaltung der innerhalb der Matrix aus thermoplastischem Material eingebetteten Endlosfasern auf, um einer unerwünschten Faserverschiebung während eines Umformvorganges entgegenzuwirken oder Verformungen bzw. Lageveränderungen der Endlosfasern zum Zwecke möglichst optimierter mechanischer Eigenschaften der endgeformten Verbundstruktur zu begünstigen.

Lösungsgemäß zeichnet sich das Verfahren zur Herstellung einer formbaren thermoplastischen endlosfaserverstärkten Verbundstruktur gemäß den Merkmalen des Oberbegriffes des Anspruches 1 dadurch aus, dass ein Verbundstrukturhalbzeug mit den wenigstens zwei Schichten bereitgestellt wird, von dem die wenigstens eine Schicht, in der der Endlosfasern enthalten sind, mit einem Infrarotstrahlungsfeld berührungslos derart erwärmt wird, dass die Matrix aus thermoplastischem Material innerhalb wenigstens eines ersten Flächenbereiches auf oder über eine dem thermoplastischen Material zuordenbare Schmelztemperatur erwärmt wird, indem das Infrarotstrahlungsfeld aussschließlich auf den wenigstens einen ersten Flächenbereich lokal begrenzt gerichtet wird, und die Matrix aus thermoplastischen Material innerhalb wenigstens eines unmittelbar an den wenigstens einen ersten Flächenbereich angrenzenden zweiten Flächenbereiches auf einer Temperatur unterhalb der Schmelztemperatur gehalten wird, indem zwischen einer das Infrarotstrahlungsfeld emittierenden Infrarotstrahlungsquelle und dem wenigstens einen zweiten Flächenbereich der Schicht ein Mittel eingebracht wird, durch das der wenigstens eine zweite Flächenbereich gegen das Infrarotstrahlungsfeld abgeschirmt wird. Das so erwärmte Verbundstrukturhalbzeug wird als die formbare thermoplastische, endlosfaserverstärkte Verbundstruktur bereitgestellt, deren Endlosfasern innerhalb des wenigstens einen ersten Flächenbereiches relativbeweglich und innerhalb des wenigstens einen zweiten Flächenbereiches raumfest zueinander sind.

In Analogie zu den vorstehend erwähnten Bindermethoden, mit denen Fasern lokal miteinander gefügt sind, um so im Wege eines thermisch unterstützten Umformprozesses ungewünschte Faserumorientierungen zu vermeiden, dient lösungsgemäß der wenigstens eine zweite Flächenbereich, innerhalb dem die Matrix aus thermoplastischen Material, in dem die Endlosfasern eingebettet nicht aufgeschmolzen ist und somit fest bleibt, als stabilisierender Stützbereich für das Verlegmuster der Endlosfasern, in dem die Endlosfasern ihre feste räumliche Relativlage zueinander auch während eines Thermoformprozesses behalten. Der wenigstens eine zweite Flächenbereich stellt somit nach der lösungsgemäßen Wärmebehandlung einen festen Matrixbereich dar, der eine matrixbasierte Verbindung zwischen den einzelnen Endlosfasern gewährleistet und einem Fügebereich entspricht, der ansonsten mit Hilfe an sich bekannter Nähtechniken oder Klebeverbindungen realisierbar ist.

Gegenüber bekannten Bindermethoden zeichnet sich das lösungsgemäße Verfahren insbesondere dadurch aus, dass die innerhalb der thermoplastischen Matrix eingebetteten Endlosfasern keine arbeits- und kostenintensive Vorbehandlung, wie Nähen oder Kleben, bedürfen, vielmehr können die Anzahl, Lage und Form der jeweils zweiten Flächenbereiche der die Endlosfasern enthaltenden Schicht, die den festen Fügestellen bzw. -bereichen entsprechen, ausschließlich durch eine spezielle Vorgehensweise bei der Erwärmung des Verbundstrukturhalbzeuges vorgegeben werden.

In einer alternativen, lösungsgemäßen Verfahrensvariante, bei der ebenfalls ein Verbundstrukturhalbzeug mit den wenigstens zwei Schichten bereitgestellt wird, wird die wenigstens eine Schicht, in der die Endlosfasern enthalten sind, mit einem Infrarotstrahlungsfeld berührungslos derart erwärmt, dass die Matrix aus thermoplastischen Material innerhalb wenigstens eines ersten Flächenbereiches auf eine erste Temperatur T1 über eine dem thermoplastischen Material zugeordnete Schmelztemperatur erwärmt wird und die Matrix aus thermoplastischem Material innerhalb wenigstens eines unmittelbar an den wenigstens einen ersten Flächenbereich angrenzenden zweiten Flächenbereiches auf eine zweite Temperatur T2 erwärmt wird, die mindestens der Schmelztemperatur entspricht und niedriger als die erste Temperatur T1 ist, indem zwischen einer das Infrarotstrahlungsfeld emittierende Infrarotstrahlungsquelle und dem wenigstens einen zweiten Flächenbereich der Schicht ein Mittel eingebracht wird, durch das der wenigstens eine zweite Flächenbereich gegen das Infrarotstrahlungsfeld abgeschirmt wird, und das so erwärmte Verbundstrukturhalbzeug als die formbare thermoplastische, endlosfaserverstärkte Verbundstruktur bereitgestellt wird, deren Endlosfasern innerhalb des wenigstens einen ersten Flächenbereiches relativbeweglicher sind als die Endlosfasern innerhalb des wenigstens einen zweiten Flächenbereiches.

Durch die gezielte Einstellung und Wahl der beiden, jeweils über dem Schmelzpunkt des thermoplastischen Materials liegenden Temperaturen T1 und T2, von denen T2 kleiner bzw. niedriger gegenüber T1 gewählt ist, lassen sich in den wenigsten zwei unmittelbar aneinandergrenzenden ersten und zweiten Flächenbereichen unterschiedliche Viskositäten vorgeben, die maßgeblich für die Relativbeweglichkeit der in der jeweils aufgeschmolzenen Thermoplastmatrix in beiden Flächenbereichen enthaltenen Endlosfaserbestandteilen sind. Durch die im ersten Flächenbereich vorherrschende höhere Temperatur T1 ist die Viskosität η1 des aufgeschmolzenen Thermoplastmaterials in diesem Flächenbereich kleiner als Viskosität η2 des im zweiten Flächenbereich bei der Temperatur T2 geschmolzenen Thermoplastmaterials. Dies bedeutet, dass die Relativbeweglichkeit der Endlosfasern innerhalb des ersten Flächenbereiches größer ist als die Relativbeweglichkeit der Endlosfasern im zweiten Flächenbereich.

Je nach Art der weiterführenden Prozesse, insbesondere Umformprozesse, denen die lösungsgemäße formbare, thermoplastische, endlosfaserverstärkte Verbundstruktur nachfolgend unterzogen wird, können die durch unterschiedlichen thermischen Eintrag bedingten Relativbeweglichkeiten der Endlosfasern in den wenigsten zwei aneinandergrenzenden Flächenbereichen prozessspezifisch angepasst werden.

In vorteilhafter Weise eignet sich als Verbundstrukturhalbzeug eine ebene kompakte feste Mehrschichtstruktur, die aus zwei, vorzugsweise aus einer Vielzahl, jeweils aus Vollmaterial bestehenden festen Schichten besteht, von denen jeweils wenigstens eine Deckschicht der Mehrschichtstruktur aus thermoplastischem Material gefertigt ist, in das die Endlosfasern eingebettet sind. Derartige Mehrschichtstrukturen werden auch als Organobleche bezeichnet. Gleichfalls eignen sich ebene, feste Sandwichstrukturen als Verbundstrukturhalbzeug, mit wenigstens einer zumindest teilweise luft- oder gasgefüllten, Kernschicht, beispielsweise in Form einer wabenförmig strukturierten ausgebildeten Schichtstruktur oder eine unstrukturierten Schaumschicht, an der mittel- oder unmittelbar wenigstens einseitig eine Deckschicht angrenzt, in der die Endlosfasern in der Matrix aus thermoplastischem Material eingebettet sind.

Nicht notwendigerweise, jedoch in bevorzugter Form bestehen sämtliche Schichten des Verbundstrukturhalbzeuges aus thermoplastischem Material, das jeweils einheitlich gewählt oder über identische oder ähnliche Schmelztemperaturen verfügt.

Unabhängig von der Anzahl der einzelnen Schichten des bereitgestellten ebenen Verbundstrukturhalbzeuges, richtet sich die lösungsgemäße Erwärmung primär auf die jeweils äußerste Schicht, d.h. auf die Deckschicht bzw. die Deckschichten des Verbundstrukturhalbzeuges in der bzw. in denen jeweils die Endlosfasern eingebettet sind.

Zum Zwecke der Erwärmung eben jener Deckschicht eignet sich ein mittels wenigstens einer Strahlungsquelle erzeugbares homogenes Infrarotstrahlungsfeld, das auf die wenigstens eine Deckschicht gerichtet wird. Somit erfolgt die Erwärmung der Deckschicht berührungslos mittels eines kontinuierlichem Infrarotstrahlungsfeldes.

In einer ersten Verfahrensvariante wird das Infrarotstrahlungsfeld ausschließlich auf jenen ersten Flächenbereich bzw. jeweils jene erste Flächenbereiche lokal begrenzt gerichtet, in dem bzw. in denen es gilt die Matrix aus thermoplastischem Material der Deckschicht möglichst homogen und vollständig über deren Schmelztemperatur zu erwärmen. Zugleich gilt es jedoch dafür Sorge zu tragen, dass der unmittelbar an dem ersten Flächenbereich angrenzende zweite Flächenbereich bzw. die an die ersten Flächenbereiche jeweils unmittelbar angrenzenden zweiten Flächenbereiche von dem Infrarotstrahlungsfeld nicht oder nur in einem vernachlässigbaren Umfang beaufschlagt werden, so dass das thermoplastische Material in diesen jeweils zweiten Flächenbereichen unter der Schmelztemperatur und somit im festen Aggregatszustand verbleibt, wodurch die jeweils innerhalb des zweiten Flächenbereiches verlaufenden Endlosfasern bzw. Endlosfaserbereiche auch nach dem Erwärmungsprozess raumfest zueinander gefügt bzw. fixiert bleiben.

Unter Anwendung der alternativen lösungsgemäßen Verfahrensvariante gilt es die Thermoplast-Materialmatrix im zweiten Flächenbereich über die Schmelztemperatur zu erwärmen auf die Temperatur T2, die allerdingd niedriger als die im ersten Flächenbereich vorherrschende Temperatur T1 ist. Auf diese Weise sind auch die Endlosfaserbestandteile im zweiten Flächenbereich relativbeweglich zueinander, jedoch in einem kontrolliert einstellbar geringeren Maße als die Endlosfaserbestandteile innerhalb des ersten Flächenbereiches. Aus diese Weise lassen sich individuell aufeinander abgestimmte thermische Verhältnisse innerhalb zweier aneinandergrenzenden Flächenbereiche mit jeweils kontrolliert einstellbaren Viskositäten und damit verbundenen Relativbeweglichkeiten der Endlosfaserbestandteile innerhalb der jeweiligen aufgeschmolzenen Thermoplast-Materialmatrix schaffen.

Zum Zwecke der Abschattung bzw. Abdeckung des jeweils zweiten Flächenbereiches der Deckschicht eignen sich Blenden oder Masken, die möglichst nahe an der Deckschichtoberfläche angeordnet sind und somit eine thermische Schattenwirkung zum Schutz des jeweils zweiten Flächenbereiches bzw. der jeweils zweiten Flächenbereiche gegenüber des ansonsten auf die Deckschicht einwirkenden Infrarotstrahlungsfeldes entfalten.

In einer weiteren bevorzugten Ausführungsform des lösungsgemäßen Verfahrens wird die wenigstens eine die Endlosfasern enthaltende Deckschicht des Verbundstrukturhalbzeuges in einem ersten Verfahrensschritt homogen und ganzflächig auf eine Vorwärmtemperatur unterhalb der Schmelztemperatur des thermoplastischen Materials erwärmt. Die Vorwärmung kann grundsätzlich beliebig erfolgen, beispielsweise innerhalb eines Heizofens und/oder unter Verwendung wenigstens einer Strahlenquelle zur Erzeugung eines auf die Deckschichtoberfläche des Verbundstrukturhalbzeuges gerichteten Infrarotstrahlungsfeldes.

In einem zweiten, darauffolgenden Verfahrensschritt wird ausschließlich der wenigstens eine erste Flächenbereich der Deckschicht des Verbundstrukturhalbzeuges auf oder über die Schmelztemperatur erwärmt, wodurch die in diesem wenigstens einem ersten Flächenbereich vorhandene Matrix aus thermoplastischem Material in einen fließfähigen bzw. flüssigen Aggregatszustand überführt wird.

Das Erwärmen der Deckschicht des Verbundstrukturhalbzeuges im zweiten Verfahrensschritt erfolgt mit wenigstens einem Infrarotstrahlungsfeld derart, dass zwischen einer das wenigstens eine Infrarotstrahlungsfeld emittierenden Infrarotstrahlungsquelle und wenigstens einem zweiten Flächenbereich der Deckschicht ein Mittel eingebracht wird, durch das der wenigstens eine zweite Flächenbereich gegen das Infrarotstrahlungsfeld abgeschirmt wird. Wie bereits erwähnt eignet sich als bevorzugtes Mittel eine Blenden- oder Maskenanordnung, die die auf ihr auftreffende Infrarotstrahlung absorbiert und/oder reflektiert und somit ein Aufschmelzen des thermoplastischen Materials innerhalb des jeweils zweiten Flächenbereiches verhindert.

In einer bevorzugten Ausführungsvariante des Verfahrens wird vor, während und nach dem Erwärmen der wenigstens einen Deckschicht des Verbundstrukturhalbzeuges zumindest zeitweise eine Zwangsluft- oder Gasströmung längs der wenigstens einen zu erwärmenden Deckschicht im Aufheizraum erzeugt und abgeführt, um Wärmestaueffekte zwischen der Blenden- oder Maskenanordnung und der Oberfläche der Deckschicht zu vermeiden und auf diese Weise die thermische Trennschärfe zwischen dem jeweils ersten thermisch zu erweichenden Flächenbereich und den jeweils unmittelbar daran angrenzenden zweiten Flächenbereich, in den die Matrix aus thermoplastischem Material in einem festen Aggregatszustand verbleibt.

Die Anzahl, Form und Größe der jeweils unmittelbar aneinander angrenzenden jeweils ersten und zweiten Flächenbereiche wird durch die Ausgestaltung der Blenden- oder Maskenanordnung bestimmt, auf die im weiteren unter Bezugnahme auf ein illustriertes Ausführungsbeispiel näher eingegangen wird.

Die Erwärmung des Verbundstrukturhalbzeuges wird vorzugsweise beendet, sobald die Matrix aus thermoplastischem Materials innerhalb des jeweils ersten Flächenbereiches bei einer vordefinierten Temperatur gleichmäßig aufgeschmolzen ist.

Die auf diese Weise thermisch behandelte, formbare thermoplastische, endlosfaserverstärkte Verbundstruktur zeichnet sich somit dadurch aus, dass die Matrix aus thermoplastischen Material innerhalb wenigstens des einen ersten Flächenbereiches aufgeschmolzen ist, so dass sich die Endlosfasern innerhalb des ersten Flächenbereiches relativ zueinander bewegen können, wohingegen die Matrix aus thermoplastischen Material innerhalb eines unmittelbar an den ersten Flächenbereich angrenzenden zweiten Flächenbereich von fester Konsistenz ist und die Endlosfasern somit innerhalb des zweiten Flächenbereiches raumfest zueinander gefügt bleiben.

In einer weiterführenden Ausführungsvariante des lösungsgemäßen Verfahrens schließt sich an den zweiten Erwärmungsschritt, bei dem das thermoplastische Material innerhalb des wenigstens ersten Flächenbereich homogen aufgeschmolzen worden ist, eine weiterführende Erwärmung an, wodurch innerhalb eines jeweils ersten Flächenbereiches ein flächenspezifischer Temperaturgradient erzeugt wird, d.h. innerhalb eines ersten Flächenbereiches existiert wenigstens ein Teilflächenbereich mit einer gegenüber der vorherrschenden Temperatur erhöhten Temperatur. Durch einen derartigen flächenspezifischen Temperaturgradient können in den sich unmittelbar und/oder mittelbar jeweils an der Deckschicht angrenzenden Schichten aus thermoplastischem Material der Verbundstruktur technisch nutzbare thermische Effekte erzielt werden. Handelt es sich beispielsweise um eine unter der Deckschicht angebrachte, strukturierte, Kernschicht, beispielsweise in Form einer Wabenstruktur, so lässt sich auf diese Weise die aus thermoplastischem Material gefertigte Wabenstruktur lokal individuell temperieren und somit bereichsweise unterschiedlich verformen.

Die dem lösungsgemäßen Verfahren zugrunde liegende Idee der lokalen Fixierung oder einer kontrolliert vorgegebenen, vorzugsweise reduzierten Relativbeweglichkeit der innerhalb einer Matrix aus thermoplastischem Material eingebetteten Endlosfasern innerhalb einer Deckschicht einer Verbundstruktur sowie der Schaffung von erweichten Flächenbereichen der Deckschicht für eine kontrollierte Relativbewegung der Endlosfasern der erweichten Matrix im Rahmen eines nachfolgenden Thermopress- oder Thermoformverfahrens, ermöglicht eine kostengünstige und für die industrielle Fertigung geeignete thermische Vorbehandlung einer verformbaren thermoplastischen endlosfaserverstärkten Verbundstruktur, die als Halbzeug für einen nachfolgenden die Verbundstruktur funktionalisierenden und/oder formgebenden Bearbeitungsvorgang geeignet ist.

Neben der bereits erwähnten Eignung für einen nachfolgenden Press- bzw. Thermoformprozess eignen sich die lösungsgemäß aufgeschmolzenen Deckschichtbereiche für ein Anbringen zusätzlicher thermoplastischer Teile oder Komponenten, die beispielsweise im Wege eines Spritz- oder Gießvorganges an die jeweils über die Schmelztemperatur erweichten ersten Flächenbereiche gefügt werden können.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Schematische Darstellung eines Verbundstrukturhalbzeuges,
- Fig. 2a bis c: Prozessschrittabfolge zur lösungsgemäßen Erwärmung und Erweichung des Verbundstrukturhalbzeuges sowie
- Fig. 3: Darstellung einer bevorzugten Variante einer formbaren, thermoplastischen endlosfaserverstärkten Verbundstruktur.

### Wege zur Ausführung der Erfindung, gewerbliche Verwendbarkeit

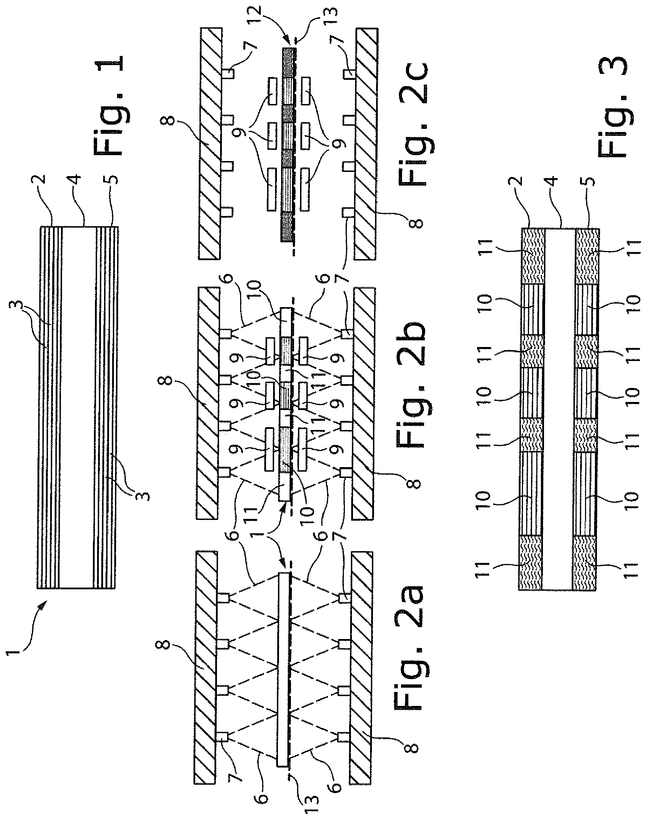

Fig. 1 zeigt eine schematische Längsschnittdarstellung eines ebenen Verbundstrukturhalbzeuges 1, das in Form einer dreischichtigen Mehrschichtstruktur ausgebildet ist, mit einer oberen Deckschicht 2, die aus einem thermoplastischen Material besteht, in das Endlosfasern 3 eingebettet sind. Unmittelbar an der oberen Deckschicht 3 schließt eine Kernschicht 4 an, die entweder aus weiteren endlosfaserverstärkten thermoplastischen Einzelschichten oder einer strukturierten thermoplastischen Schicht, beispielsweise in Form einer Wabenstruktur, ausgebildet ist. Unterhalb der Kernschicht 4 schließt eine untere thermoplastische Deckschicht 5 an, in deren thermoplastischen Matrix gleichfalls Endlosfasern 3 eingebettet sind. Die thermoplastischen Materialien zumindest der oberen und unteren Deckschichten 2, 5 sind vorzugswiese identisch. Das eben ausgebildete Verbundstrukturhalbzeug liegt anfänglich in fester Konsistenz vor.

Das in Fig. 1 illustrierte Verbundstrukturhalbzeug 1 wird zur Erwärmung der jeweils oberen und unteren Deckschicht 2, 5 zwischen zwei Infrarotstrahlungsfelder 6 positioniert, die jeweils von einer Vielzahl von Strahlenquellen 7, die jeweils an Tragstrukturen 8 angebracht sind, emittiert werden, siehe Fig. 2a. Beide Infrarotstrahlungsfelder 6 verfügen über eine homogene Strahlungsintensität, durch die das Verbundstrukturhalbzeug 1, das horizontal auf einer Trägergitterstruktur 13 aufliegt, gleichmäßig beleuchtet wird. Die Trägergitterstruktur 13 besteht vorzugsweise aus einem für Infrarotstrahlung transparenten Metallgitter, das über keine oder nur vernachlässigbare Infrarotabschattungseigenschaften verfügt.

Die flächig gleichmäßige Bestrahlung der oberen und unteren Deckschicht 2, 5 des Verbundstrukturhalbzeuges 1 erfolgt im Wege einer Vorheizung bis beide Deckschichten 2, 5 vollständig und gleichmäßig eine Temperatur nahe unterhalb des Schmelzpunktes des thermoplastischen Materials besitzen. Die Schmelztemperatur ist bei teilkristallinen Thermoplasten als Kristallitschmelztemperatur und bei amorphen Thermoplasten als Glasübergangstemperatur definiert.

Nach Erreichen einer vorgegebenen Zieltemperatur nahe unterhalb der Schmelztemperatur, typischerweise 3 bis 20 K unter der Schmelztemperatur, werden nahe der Oberfläche der Deckschichten 2, 5 Blenden 9, vorzugsweise aus einem metallischen Werkstoff zwischen den IR-Strahlungsquellen 7 und dem Verbundstrukturhalbzeug 1, vorzugsweise jeweils in einem Abstand zwischen 0,5 und 3 cm über bzw. unter der Deckschichtoberfläche positioniert. Die Blenden schirmen die Infrarotstrahlung 6 zum Zwecke einer weiteren Erwärmung der jeweils zweiten Flächenbereiche 10 der oberen und unteren Deckschicht 2, 5 ab, wodurch in diesen jeweils zweiten Flächenbereichen der weitere Wärmeeintrag durch die Infrarotstrahlung 6 unterbunden wird. Die Blenden 9 sind vorzugsweise relativbeweglich zur Trägergitterstruktur 13 angeordnet, so dass die Blenden 9 jeweils längs über bzw. unter der oberen bzw. unteren Deckschicht 2, 5 zum Zwecke der Infrarotstrahlungsabschirmung geschoben werden können.

Im weiteren Prozessverlauf werden die von den Blenden 9 nicht abgedeckten, so genannten ersten Flächenbereiche 11 weiter erwärmt bis das thermoplastische Material innerhalb dieser ersten Flächenbereichen 11 der oberen und unteren Deckschicht 2, 5 vollständig und gleichmäßig aufgeschmolzen ist.

Aufgrund des nur geringen Wärmeleitkoeffizienten des thermoplastischen Materials der oberen und unteren Deckschicht 2, 5 sowie der in der atmosphärischen Umgebung des Verbundstrukturhalbzeuges 1 kälteren Lufttemperatur - im Vergleich zur Temperatur des Verbundstrukturhalbzeuges - kommt es in den abgeschirmten jeweils zweiten Flächenbereichen 10 zu keinem bzw. nur zu vernachlässigbaren Wärmeeintrag. Dies ermöglicht signifikant abgegrenzte Bereiche zwischen der jeweils festen thermoplastischen Matrix innerhalb der zweiten Flächenbereiche 10 zu den unmittelbar daran angrenzenden aufgeschmolzenen, jeweils ersten Flächenbereichen 11. Der lösungsgemäße Aufschmelzprozess kann abrupt unterbrochen bzw. beendet werden, siehe Fig. 2c, um unerwünschte Überhitzungen und damit verbundene Materialdegradationen innerhalb der erweichten thermoplastischen Materialmatrix zu vermeiden.

Form, Anzahl und Größe der jeweils im festen Aggregatszustand verbleibenden zweiten Flächenbereiche 10 können durch individuell gestaltete und angeordnete Blenden 9 individuell gewählt werden.

Im Ergebnis wird eine in Fig. 3 illustrierte formbare thermoplastische endlosfaserverstärkte Verbundstruktur 12 erhalten, deren obere und untere Deckschicht 2, 5 erste Flächenbereiche 11 besitzt, in denen die in der lokal aufgeschmolzenen thermoplastischen Matrix eingebetteten Endlosfasern 3 relativ zueinander beweglich sind, wohingegen innerhalb der unmittelbar an den ersten Flächenbereichen 11 angrenzenden zweiten Flächenbereichen 10 die in den jeweils festen thermoplastischen Matrix eingebetteten Endlosfasern 3 fest gefügt sind. Durch die feste Fügung der Endlosfasern innerhalb der zweiten Flächenbereiche 10 ist für eine geordnete Umorientierung der Endlosfasern 3 innerhalb der ersten Flächenbereichen 11 im Rahmen eines nachfolgenden Umformvorganges gesorgt. Durch die Stabilisierung der Endlosfasern jeweils innerhalb der zweiten Flächenbereiche 10 lassen sich komplexere Bauteilgeometrien bei der Herstellung von endlosfaserverstärkten thermoplastischen Kunststoffbauteilen mit reversibel einstellbaren Materialeigenschaften erzielen.

Eine Entnahme der formbaren, thermoplastischen, endlosfaserverstärkten Verbundstruktur 12 aus der Infrarot-Heizvorrichtung kann mit Hilfe einer geeigneten Greif- oder Transportvorrichtung erfolgen, die die Verbundstruktur 12 lediglich an den nicht aufgeschmolzenen, zweiten Flächenbereichen 10 greift bzw. handhabt, wodurch keinerlei Handhabungsspuren an den Oberflächen der jeweils zweiten Flächenbereichen 10 entstehen.

Im Falle der alternativen Verfahrensvariante, bei der auch die zweiten Flächenbereiche 10 auf eine Temperatur T2 oberhalb der Schmelztemperatur jedoch niedriger als die in den jeweils ersten Flächenbereichen 11 vorherrschende Temperatur T1 geheizt werden, eignen sich die vorstehend erläuterten Blenden 9. Im Unterschied zu den vorstehenden Erläuterungen erfolgt die Vorheizung beider Deckschichten 2, 5 vollständig und gleichmäßig auf die Temperatur T1, vorzugsweise knapp über dem Schmelzpunkt des thermoplastischen Materials. Die weitere Erwärmung erfolgt, wie vorstehend beschrieben, mittels der die jeweils zweiten Flächenbereiche 10 berührungslos abdeckenden Blenden 9.

### Bezugszeichenliste

- 1: Verbundstrukturhalbzeug
- 2: obere Deckschicht
- 3: Endlosfasern
- 4: Kernschicht
- 5: untere Deckschicht
- 6: Infrarotstrahlungsfeld
- 7: Infrarotstrahlungsquelle
- 8: Trägerstruktur
- 9: Blende
- 10: zweiter Flächenbereich
- 11: erster Flächenbereich
- 12: Verbundstruktur
- 13: Trägergitterstruktur

## Patentansprüche

1. Verfahren zur Herstellung einer formbaren thermoplastischen, endlosfaserverstärkten Verbundstruktur (12), die wenigstens zwei Schichten (2, 5) aufweist, von denen in wenigstens einer Schicht (2, 5) Endlosfasern (3) in einer Matrix aus thermoplastischen Material eingebettet sind, **dadurch gekennzeichnet, dass** ein Verbundstrukturhalbzeug (1) mit den wenigstens zwei Schichten (2, 5) bereitgestellt wird, von denen die wenigstens eine Schicht (2, 5), in der die Endlosfasern (3) enthalten sind, mit einem Infrarotstrahlungsfeld (6) berührungslos derart erwärmt wird, dass die Matrix aus thermoplastischen Material innerhalb wenigstens eines ersten Flächenbereiches (11) auf oder über eine dem thermoplastischen Material zuordenbare Schmelztemperatur erwärmt wird, indem das Infrarotstrahlungsfeld (6) ausschließlich auf den wenigstens einen ersten Flächenbereich (11) lokal begrenzt gerichtet wird, und die Matrix aus thermoplastischem Material innerhalb wenigstens eines unmittelbar an den wenigstens einen ersten Flächenbereich (11) angrenzenden zweiten Flächenbereiches (10) auf einer Temperatur unterhalb der Schmelztemperatur gehalten wird, indem zwischen einer das Infrarotstrahlungsfeld (6) emittierenden Infrarotstrahlungsquelle (7) und dem wenigstens einen zweiten Flächenbereich (10) der Schicht ein Mittel eingebracht wird, durch das der wenigstens eine zweite Flächenbereich (10) gegen das Infrarotstrahlungsfeld (6) abgeschirmt wird, und das so erwärmte Verbundstrukturhalbzeug (1) als die formbare thermoplastische, endlosfaserverstärkte Verbundstruktur (12) bereitgestellt wird, deren Endlosfasern (3) innerhalb des wenigstens einen ersten Flächenbereiches (11) relativbeweglich und innerhalb des wenigstens einen zweiten Flächenbereiches (10) raumfest zueinander sind.

2. Verfahren zur Herstellung einer formbaren thermoplastischen, endlosfaserverstärkten Verbundstruktur (12), die wenigstens zwei Schichten (2, 5) aufweist, von denen in wenigstens einer Schicht (2, 5) Endlosfasern (3) in einer Matrix aus thermoplastischen Material eingebettet sind, **dadurch gekennzeichnet, dass** ein Verbundstrukturhalbzeug (1) mit den wenigstens zwei Schichten (2, 5) bereitgestellt wird, von denen die wenigstens eine Schicht (2, 5), in der die Endlosfasern (3) enthalten sind, mit einem Infrarotstrahlungsfeld (6) berührungslos derart erwärmt wird, dass die Matrix aus thermoplastischen Material innerhalb wenigstens eines ersten Flächenbereiches (11) auf eine erste Temperatur T1 über eine dem thermoplastischen Material zugeordnete Schmelztemperatur erwärmt wird, indem das Infrarotstrahlungsfeld (6) ausschließlich auf den wenigstens einen ersten Flächenbereich (11) lokal begrenzt gerichtet wird, und die Matrix aus thermoplastischem Material innerhalb wenigstens eines unmittelbar an den wenigstens einen ersten Flächenbereich (11) angrenzenden zweiten Flächenbereiches (10) auf eine zweite Temperatur T2 erwärmt wird, die mindestens der Schmelztemperatur entspricht und niedriger als die erste Temperatur T1 ist, indem zwischen einer das Infrarotstrahlungsfeld (6) emittierenden Infrarotstrahlungsquelle (7) und dem wenigstens einen zweiten Flächenbereich (10) der Schicht ein Mittel eingebracht wird, durch das der wenigstens eine zweite Flächenbereich (10) gegen das Infrarotstrahlungsfeld (6) abgeschirmt wird, und das so erwärmte Verbundstrukturhalbzeug (1) als die formbare thermoplastische, endlosfaserverstärkte Verbundstruktur (12) bereitgestellt wird, deren Endlosfasern (3) innerhalb des wenigstens einen ersten Flächenbereiches (11) relativbeweglicher sind als die Endlosfasern (3) innerhalb des wenigstens einen zweiten Flächenbereiches (10).

3. Verfahren nach Anspruch 1 oder 2,
**dadurch gekennzeichnet, dass** als Verbundstrukturhalbzeug (1) eine ebene kompakte, feste Mehrschichtstruktur oder eine ebene feste Sandwichstruktur mit wenigstens einer zumindest teilweise Luft oder Gas gefüllten Kernschichtstruktur (4) verwendet wird, die wenigstens eine Deckschicht (2, 5) aufweist, in der die Endlosfasern (3) in der Matrix aus thermoplastischen Material eingebettet sind.

4. Verfahren nach einem der Ansprüche 1, 3 oder 4,
**dadurch gekennzeichnet, dass** zumindest die die Endlosfasern (3) enthaltende Schicht (2, 5) des Verbundstrukturhalbzeuges (1) in einem ersten Schritt homogen auf eine Vorwärmtemperatur unterhalb der Schmelztemperatur erwärmt wird und in einem zweiten Schritt ausschließlich der wenigstens eine erste Flächenbereich (11) des Verbundstrukturhalbzeuges (1) auf oder über die Schmelztemperatur erwärmt wird.

5. Verfahren nach einem der Ansprüche 2 bis 4,
**dadurch gekennzeichnet, dass** zumindest die die Endlosfasern (3) enthaltende Schicht (2, 5) des Verbundstrukturhalbzeuges (1) in einem ersten Schritt homogen auf die zweite Temperatur T2 erwärmt wird und in einem zweiten Schritt ausschließlich der wenigstens eine erste Flächenbereich (11) des Verbundstrukturhalbzeuges (1) auf die Temperatur T1 erwärmt wird.

6. Verfahren nach Anspruch 4 oder 5,
**dadurch gekennzeichnet, dass** das Erwärmen des Verbundstrukturhalbzeuges (1) im zweiten Schritt derart durchgeführt wird, dass zwischen der das wenigstens eine Infrarotstrahlungsfeld (6) emittierenden Infrarotstrahlungsquelle (7) und dem wenigstens einen zweiten Flächenbereich (10) der Schicht (2, 5) das Mittel eingebracht wird, durch das der wenigstens eine zweite Flächenbereich (10) gegen das Infrarotstrahlungsfeld (6) abgeschirmt wird.

7. Verfahren nach einem der Ansprüche 1 bis 6,
**dadurch gekennzeichnet, dass** als Mittel eine Blenden- oder Maskenanordnung (9) verwendet wird, die auf ihr auftreffende Infrarotstrahlung absorbiert und /oder reflektiert.

8. Verfahren nach einem der Ansprüche 3 bis 7,
**dadurch gekennzeichnet, dass** vor, während und/oder nach dem Erwärmens des Verbundstrukturhalbzeuges (1) zumindest zeitweise eine Zwangsluftströmung zwischen der wenigstens einen Infrarotstrahlungsquelle (7) und dem Verbundstrukturhalbzeug (1) erzeugt wird.

9. Verfahren nach einem der Ansprüche 1, 3 bis 4 oder 6 bis 8,
**dadurch gekennzeichnet, dass** die Erwärmung des Verbundstrukturhalbzeuges (1) beendet wird, sobald die Matrix aus thermoplastischen Material innerhalb des wenigstens einen ersten Flächenbereiches (11) bei einer vordefinierten Temperatur gleichmäßig aufgeschmolzen ist.

10. Verfahren nach einem der Ansprüche 2, 3 oder 5 bis 8,
**dadurch gekennzeichnet, dass** die Erwärmung des Verbundstrukturhalbzeuges (1) beendet wird, sobald die Matrix aus thermoplastischen Material innerhalb des wenigstens einen ersten Flächenbereiches (11) bei der ersten Temperatur T1 gleichmäßig aufgeschmolzen ist.

11. Vorrichtung zur Durchführung des Verfahrens zur Herstellung der formbaren thermoplastischen, endlosfaserverstärkten Verbundstruktur (12) nach einem der Ansprüche 1 bis 10 mit wenigstens einer ein homogenes Infrarotstrahlungsfeld (6) erzeugenden Strahlungsquelle (7), die während des Aufheizens über und/oder unter einer ebenen, horizontal gelagerten Trägergitterstruktur (13) angeordnet ist und deren Infrarotstrahlungsfeld (6) auf die Trägergitterstruktur (13) gerichtet ist, deren Oberseite zur Auflage des Verbundstrukturhalbzeuges (1) ausgebildet ist, sowie mit wenigstens einer Blendenanordnung (9), die zwischen der wenigstens einen Strahlungsquelle (7) und der Trägergitterstruktur (13) sowie parallel zur Oberseite relativbeweglich zur Trägergitterstruktur (13) angeordnet ist.

12. Vorrichtung nach Anspruch 11,
**dadurch gekennzeichnet, dass** die Blendenanordnung (9) in einem vertikalen Abstand zur Trägergitterstruktur (13) angeordnet ist, so dass zwischen der Blendenanordnung (9) und einem auf der Oberseite der Trägergitterstruktur (13) aufliegenden Verbundstrukturhalbzeug (1) ein Abstand zwischen 0,5 mm und 3 cm ist.

## Claims

1. A method for producing a mouldable thermoplastic composite structure (12) reinforced with endless fibres, having at least two layers (2, 5), in at least one layer (2, 5) of which endless fibres (3) are embedded in a matrix of thermoplastic material, **characterized in that** one semi-finished composite structure article (1) is provided having the at least two layers (2, 5), of which the at least one layer (2, 5) in which the endless fibres (3) are contained is heated contactlessly with an infrared radiation field (6) in such manner that the matrix of thermoplastic material is heated within at least a first surface region (11) up to or above a melting temperature assignable to the thermoplastic material by directing the infrared radiation field (6) in locally limited manner exclusively at the at least one first surface region (11), and the matrix of thermoplastic material within a second surface region (10) directly adjacent to the at least one first surface region (11) is maintained at a temperature below the melting temperature by interposing a means between an infrared radiation source (7) that emits the infrared radiation field (6) and the at least one second surface region (10) of the layer, by which means the at least one second surface region (10) is shielded from the infrared radiation field (6), and the semi-finished composite structure article (1) heated in this way is provided as the mouldable thermoplastic composite structure (12) reinforced with endless fibres, the endless fibres (3) of which are able to move relatively within the at least one first surface region (11) and are spatially immobilised relatively within the at least one second surface region (10).

2. A method for producing a mouldable thermoplastic composite structure (12) reinforced with endless fibres which has at least two layers (2, 5), of which endless fibres (3) in at least one layer (2, 5) are embedded in a matrix of thermoplastic material, **characterized in that** one semi-finished composite structure article (1) is provided having the at least two layers (2, 5), of which the at least one layer (2, 5) in which the endless fibres (3) are contained is heated contactlessly with an infrared radiation field (6) in such manner that the matrix of thermoplastic material is heated within at least a first surface region (11) to a first temperature T1 above a melting temperature assignable to the thermoplastic material by directing the infrared radiation field (6) in locally limited manner exclusively at the at least one first surface region (11), and the matrix of thermoplastic material within at least one second surface region (10) directly adjacent to the at least one first surface region (11) is heated to a second temperature T2, which is are least equal to the melting temperature and is lower than the first temperature T1, by interposing a means between an infrared radiation source (7) that emits the infrared radiation field (6) and the at least one second surface region (10) of the layer, by which means the at least one second surface region (10) is shielded from the infrared radiation field (6), and the semi-finished composite structure article (1) heated in this way is provided as the mouldable thermoplastic composite structure (12) reinforced with endless fibres, the endless fibres (3) of which are more mobile relative to each other within the at least one first surface region (11) than the endless fibres (3) within the at least one second surface region (10).

3. The method according to Claim 1 or 2,
**characterized in that** a flat, compact, solid multilayer structure or a flat, solid sandwich structure having at least one core layer structure (4) which is at least partially filled with air or gas, and having a least one cover layer (2, 5) in which the endless fibres (3) are embedded in the matrix of thermoplastic material is used as the semi-finished composite structure article (1) .

4. The method according to any one of Claims 1, 3 or 4,
**characterized in that** in a first step at least the layer (2, 5) of the semi-finished composite structure article (1) containing the endless fibres (3) is warmed homogeneously to a preheating temperature below the melting temperature, and in a second step only the at least one first surface region (11) of the semi-finished composite structure article (1) is heated up to or above the melting temperature.

5. The method according to any one of Claims 2 to 4,
**characterized in that** in a first step at least the layer (2, 5) of the semi-finished composite structure article (1) containing the endless fibres (3) is warmed homogeneously to the second temperature T2, and in a second step only the at least one first surface region (11) of the semi-finished composite structure article (1) is heated to temperature T1.

6. The method according to Claim 4 or 5,
**characterized in that** the heating of the semi-finished composite structure article (1) in the second step is carried out in such manner that the means is interposed between the infrared radiation source (7) that emits at least one infrared radiation field (6) and the at least one second surface region (10) of the layer (2, 5) by which the at least one second surface region (10) is shielded from the infrared radiation field (6).

7. The method according to any one of Claims 1 to 6,
**characterized in that** a screen or mask arrangement (9) which absorbs and/or reflects that infrared radiation that reaches it is used as the means.

8. The method according to any one of Claims 3 to 7,
**characterized in that** a forced air stream is produced at least intermittently between the at least one infrared radiation source (7) and the semi-finished composite structure article (1) before, during and/or after the heating of the semi-finished composite structure article (1).

9. The method according to any one of Claims 1, 3 to 4 or 6 to 8,
**characterized in that** the heating of the semi-finished composite structure article (1) is ended as soon as the matrix of thermoplastic material within the at least one first surface region (11) has melted evenly at a predefined temperature.

10. The method according to any one of Claims 2, 3 or 5 to 8,
**characterized in that** the heating of the semi-finished composite structure article (1) is ended as soon as the matrix of thermoplastic material within the at least one first surface region (11) has melted evenly at the first temperature T1.

11. An apparatus for carrying out the method for producing the mouldable thermoplastic composite structure (12) reinforced with endless fibres according to any one of Claims 1 to 10 having at least one radiation source (7) that produces an infrared radiation field (6), which is arranged above and/or below a flat, horizontally mounted supporting lattice structure (13) during the heating, and whose infrared radiation field (6) is directed at the supporting lattice structure (13), the upper side of which is designed to support the semi-finished composite structure article (1), and having at least one aperture arrangement (9) which is arranged between the at least one radiation source (7) and the supporting lattice structure (13) and is movable parallel to the upper side relative to the supporting lattice structure (13).

12. The apparatus according to Claim 11,
**characterized in that** the aperture arrangement (9) is arranged at a vertical distance from the supporting lattice structure (13), so that there is a distance between 0.5 mm and 3 cm between the aperture arrangement (9) and a semi-finished composite structure article (1) supported on the upper side of the supporting lattice structure (13).

## Revendications

1. Procédé de fabrication d'une structure composite renforcée de fibres continues thermoplastique moulable (12) qui comporte au moins deux couches (2, 5), dont des fibres continues (3) sont incorporées dans au moins une couche (2, 5) dans un matrice de matière thermoplastique, **caractérisée en ce qu'**une structure composite semi-finie (1) avec les au moins deux couches (2, 5) est prévue, dont au moins une couche (2, 5), dans laquelle les fibres sans fin (3) sont contenues, est chauffé avec un champ de rayonnement infrarouge (6) sans contact de telle manière que la matrice en matière thermoplastique dans au moins une première zone de surface (11) soit chauffée à ou au-dessus d'une température de fusion qui peut être attribuée au matériau thermoplastique en dirigeant le champ de rayonnement infrarouge (6) exclusivement vers la au moins une première zone de surface (11) d'une manière limitée localement, et la matrice de matériau thermoplastique dans au moins une deuxième zone de surface (10) immédiatement adjacente à la au moins une première zone de surface (11) est maintenue à une température inférieure à la température de fusion en introduisant un moyen entre une source de rayonnement infrarouge (7) émettant le champ de rayonnement infrarouge (6) et la au moins une deuxième zone de surface (10) de la couche, par l'intermédiaire de laquelle au moins une deuxième zone de surface (10) est protégée du champ de rayonnement infrarouge (6), et la structure composite semi-finie ainsi chauffée (1) est fourni en tant que structure composite renforcée de fibres continues thermoplastique moulable (12), dont les fibres continues (3) sont relativement mobiles à l'intérieur de la au moins une première zone de surface (11) et spatialement fixes les unes par rapport aux autres à l'intérieur de la au moins une deuxième zone de surface (10).

2. Procédé de production d'une structure composite renforcée de fibres continues thermoplastique moulable (12), qui présente au moins deux couches (2, 5), dont dans au moins une couche (2, 5) des fibres continues (3) sont incorporées dans un matrice en matière thermoplastique, **caractérisée en ce qu'**une structure composite semi-finie (1) est prévue avec les au moins deux couches (2, 5), dont au moins une couche (2, 5), dans laquelle les fibres continues (3) sont contenues, est chauffée sans contact à l'aide d'un champ de rayonnement infrarouge (6) de telle sorte que la matrice en matière thermoplastique à l'intérieur d'au moins une première zone de surface (11) soit chauffée à une première température T1 supérieure à une température de fusion affectée au matériau thermoplastique, en dirigeant de manière limitée localement par le champ de rayonnement infrarouge (6) exclusivement sur au moins une première zone de surface (11), et la matrice de matériau thermoplastique dans au moins une deuxième zone de surface (10) immédiatement adjacente à la au moins une première zone de surface (11) est chauffée à une deuxième température T2, qui correspond au moins à la température de fusion et est inférieure à la première température T1, en introduisant entre la source de rayonnement infrarouge (7) émettant champ de rayonnement infrarouge (6) et la au moins une deuxième zone de surface (10) de la couche, un moyen par lequel la au moins une deuxième zone de surface (10) est protégée du champ de rayonnement infrarouge (6), et le produit semi-fini à structure composite (1) est fourni comme la structure composite renforcée de fibres continues thermoplastiques (12), dont les fibres continues (3) sont relativement plus mobiles à l'intérieur d'au moins une première zone de surface (11) que les fibres continues (3) à l'intérieur d'au moins une deuxième zone de surface (10).

3. Procédé selon la revendication 1 ou 2, **caractérisé en ce qu'**une structure multicouche solide, plate et compacte ou une structure sandwich solide et plate est utilisée avec au moins une structure de couche centrale (4) au moins partiellement remplie d'air ou de gaz comme produit semi-fini de structure composite (1), qui présente au moins une couche de couverture (2, 5) dans laquelle les fibres continues (3) sont incorporées dans la matrice de matière thermoplastique.

4. Procédé selon une des revendications 1, 3 ou 4, **caractérisé en ce qu'**au moins la couche (2, 5) du produit semi-fini à structure composite (1) contenant les fibres continues (3) est chauffée de façon homogène dans une première étape à une température de préchauffage inférieure à la température de fusion et dans une deuxième étape, seule la au moins une première zone de surface (11) du produit semi-fini à structure composite (1) est chauffée à ou au-dessus de la température de fusion.

5. Procédé selon une quelconque des revendications 2 à 4, **caractérisé en ce qu'**au moins la couche (2, 5) contenant les fibres continues (3) du produit semi-fini à structure composite (1) est chauffée de manière homogène à la deuxième température T2 dans une première étape et dans une deuxième étape, seule au moins une première zone de surface (11) du produit semi-fini à structure composite (1) est chauffée à la température T1.

6. Procédé selon la revendication 4 ou 5, **caractérisé en ce que** le chauffage du produit semi-fini à structure composite (1) est effectué dans la deuxième étape de sorte qu'entre au moins une source de rayonnement infrarouge (7) émettant un champ de rayonnement infrarouge (6) et la au moins une deuxième zone de surface (10) de la couche (2, 5), le moyen est introduit, par l'intermédiaire duquel la au moins une deuxième zone de surface (10) est protégée du champ de rayonnement infrarouge (6).

7. Procédé selon une quelconque des revendications 1 à 6, **caractérisé en ce que** le moyen utilisé est un agencement de diaphragme ou de masque (9), qui absorbe et/ou réfléchit le rayonnement infrarouge qui le frappe.

8. Procédé selon une quelconque des revendications 3 à 7, **caractérisé en ce qu'**avant, pendant et/ou après chauffage du produit semi-fini à structure composite (1) au moins temporairement un flux d'air forcé entre la au moins une source de rayonnement infrarouge (7) et le produit semi-fini à structure composite (1) est généré.

9. Procédé selon une quelconque des revendications 1, 3 à 4 ou 6 à 8, **caractérisé en ce que** le chauffage du produit semi-fini à structure composite (1) est terminé dès que la matrice en matière thermoplastique à l'intérieur d'au moins une première zone de surface (11) est fondue uniformément à une température prédéfinie.

10. Procédé selon une quelconque des revendications 2, 3 ou 5 à 8, **caractérisé en ce que** le chauffage du produit semi-fini à structure composite (1) est terminé dès que la matrice en matière thermoplastique a fondu uniformément à l'intérieur d'au moins une première zone de surface (11) à la première température T1.

11. Dispositif pour la mise en œuvre du procédé de fabrication de la structure composite renforcée de fibres continues thermoplastique moulable (12) selon une des revendications 1 à 10 comportant au moins une source de rayonnement (7) générant un champ de rayonnement infrarouge homogène (6) qui, pendant le chauffage, est disposée au-dessus et/ou au-dessous d'une structure en treillis de support (13) plate montée horizontalement et dont le champ de rayonnement infrarouge (6) est dirigé vers la structure en treillis de support (13), dont la face supérieure est configurée pour supporter le produit semi-fini à structure composite (1), et comportant au moins un agencement de diaphragme (9), qui est agencé entre la au moins une source de rayonnement (7) et la structure en treillis de support (13) et est agencé parallèlement vers le côté supérieur de sorte qu'il puisse être déplacé par rapport à la structure en treillis de support (13).

12. Dispositif selon la revendication 11, **caractérisé en ce que** l'agencement de panneaux (9) est disposé à une distance verticale de la structure en treillis de support (13), de sorte qu'un espace entre 0,5 mm et 3 cm soit défini entre l'agencement de diaphragme (9) et un produit semi-fini à structure composite (1) reposant sur la face supérieure de la structure en treillis de support (13).
